# EUROPEAN PATENT APPLICATION

(11) **EP 1 445 058 A1**
(43) Date of publication of application: **11.08.2004**
(21) Application number: 04250666.7
(22) Date of filing: 07.02.2004
(51) Int. Cl.: B23P 15/26, B23P 19/04

(54) **Tube dispenser**

(30) Priority: 10.02.2003 GB 0302936
(71) Applicant: Emerson & Renwick Ltd, Accrington, Lancashire BB5 4EF (GB)
(72) Inventor: Topping, John, Blackburn Lancashire, BB1 9HX (GB); Sheard, Greg, Batley West Yorkshire, WF17 0BN (GB)
(74) Representative: Carpenter, David

(57) **Abstract**

A tube dispensing apparatus comprising a support surface (12) for supporting a stack of elongate flat tubes (13) positioned with their parallel faces generally normal to the plane of the support surface, and characterised by a dispensing edge (14) at an end of said support surface adjacent which an end tube ( 13a) of the tube stack supported on the support surface (12) can be positioned for dispensing, a movable tube abutment member (15) having a rest position adjacent said dispensing edge and against which said tube stack is urged in use, releasable clamp means (16) overlying said tube stack and clamping at least that tube next adjacent the tube (13a) to be dispensed against said support surface (12), and, means (25-29) for withdrawing said tube abutment member (15) from said rest position while said clamp means (16) is operative, so that the end tube (13a) of the stack is freed to be dispensed past said dispensing edge while the remainder of the stack is held in place relative to the support surface by said clamp means, said abutment member (15) being restored to its rest position after said tube has been dispensed, and thereafter said releasable clamp means (16) being released to permit the stack to be indexed forwards to engage the new end tube of the stack with the abutment member (15), prior to being restored to its operative condition to clamp at least the new second tube in the stack against the support surface.

## Description

The present invention relates to apparatus for dispensing tubes, particularly cut-lengths of flat extruded tube, into a core building machine for the production of heat exchangers.

It is known to dispense flat extruded tube lengths from a storage magazine in which the tubes are positioned as a stack with their flat faces in contact with faces of adjacent tubes by applying loading to the stack in a direction at right angles to the flat faces of the tubes to compress the stack against a stop-plate or other abutment. At an appropriate time a dispensing blade is driven at right angles to the stack adjacent the stop-plate to drive the tube abutting the stop-plate from the stack, and through a dispensing aperture in, for example, a support plate lying beneath the tube stack.

Flat, extruded, tube, particularly plain (non-coated) tube, is prone to scoring, scratching, and other surface marking which can impair the reliability of the tube in use. As such tubes may be used in heat exchangers, for example condensers, working at high pressure (several bar) then any surface damage to the tubes which renders them prone to leakage in use, is to be avoided.

The conventional apparatus described above requires the dispensing blade to displace the first (end) tube in the stack from between the remainder of the stack and the stop-plate. As the tube being dispensed slides on the adjacent tube and the stop plate damage to both faces of the tube being dispensed, and the front face of the next tube in the stack, can occur, and additionally sliding movement of the dispensing blade across the face of the adjacent tube in the stack can further damage the surface of that tube. The problem is further exacerbated if the tube faces are not completely flat, since in that situation the tube faces will have "high points" at which contact takes place, and it has been found that the loads involved, particularly imposed at localised points where the tubes abut one another, can result in surface "pick-up" with the tubes virtually "welding" themselves together so that dispensing of tubes becomes more problematic and jamming of the dispensing mechanism becomes more frequent.

It is an object of the present invention to provide a tube dispensing apparatus in which the aforementioned problems are minimised or obviated.

An attempt has been made to overcome the aforementioned problems by transferring tube from a storage area to a core-builder by means of a "pick and place" mechanism in which a pick-up arm selects a tube from the tube store, lifts the tube from the store and delivers it to the core builder at the appropriate time. While this solution to the problem is effective in low-speed machines it is an expensive solution, and furthermore is totally unsuitable for machines which are required to deliver two or more tubes per second to a core building apparatus. Accordingly, it is a further object of the present invention to provide an apparatus in which the aforementioned disadvantages are minimised or obviated, and in which a supply rate of two or more tubes per second to an associated apparatus can be achieved.

In accordance with the present invention there is provided a tube dispensing apparatus comprising a support surface for supporting a stack of elongate flat tubes positioned with their parallel faces generally normal to the plane of the support surface, a dispensing edge at an end of said support surface adjacent which an end tube of the tube stack supported on the support surface can be positioned for dispensing, a movable tube abutment member having a rest position adjacent said dispensing edge and against which said tube stack is urged in use, releasable clamp means overlying said tube stack and clamping at least that tube next adjacent the tube to be dispensed against said support surface, and, means for withdrawing said tube abutment member from said rest position while said clamp means is operative, so that the end tube of the stack is freed to be dispensed past said dispensing edge while the remainder of the stack is held in place relative to the support surface by said clamp means, said abutment member being restored to its rest position after said tube has been dispensed, and thereafter said releasable clamp means being released to permit the stack to be indexed forwards to engage the new end tube of the stack with the abutment member, prior to being restored to its operative condition to clamp at least the new second tube in the stack against the support surface.

Preferably the apparatus includes a reciprocable dispensing blade which, after the abutment member is withdrawn from its rest position, passes between the abutment member and the remainder of the tube stack to ensure that the free end tube is dispensed past said dispensing edge.

Desirably said means for withdrawing said abutment member, said dispensing blade and said clamp means are carried by a common movable carriage.

Conveniently said means for withdrawing said abutment member includes a roller cam arrangement.

Preferably said clamp means is spring loaded, the spring arrangement being compressed to maintain clamping force on said tubes during movement of the carriage to cause the blade to dispense the free end tube, and the spring travel of the clamping means being limited so that adjacent the end of the travel of said carriage in a return direction the clamp means is lifted by the carriage away from said tubes.

The invention further resides in a method of dispensing flat tube comprising urging a stack of tubes positioned with their flat faces parallel to one another in a direction at right angles to the parallel planes of said flat faces against an abutment member, clamping the stack, with the exception of the tube abutting the abutment member, against further movement relative to the abutment member, withdrawing the abutment member from a rest position to release the end tube of the stack to be dispensed, returning the abutment member to said rest position after said tube has been dispensed, releasing the clamping force on said stack to allow the stack to move to engage a new end tube with the abutment member, and restoring the clamping force to clamp the stack, with the exception of that tube which is engaged with the abutment member, against movement towards the abutment member.

Preferably, at a predetermined time in the repeating sequence of dispensing tubes, the step of releasing the clamping force on the stack after the abutment member has been returned to its rest position, is omitted, so that the next cycle takes place without the stack moving forward, and so takes place without a tube being dispensed.

One example of the present invention is illustrated in the accompanying drawings wherein:
Figure 1 is a diagrammatic side elevational view, partly in section, of a tube dispensing apparatus, showing the components in the positions they occupy at beginning and end of a cycle of operation of dispensing a tube, and
Figures 2 to 6 inclusive are views similar to Figure 1 but illustrating different points in the cycle of operation.

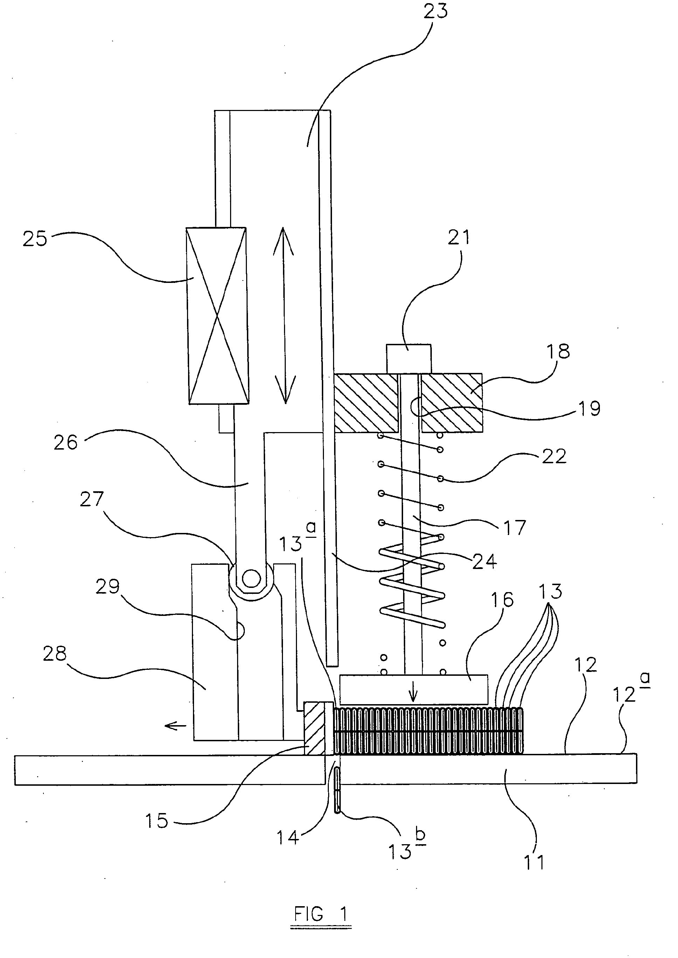

Referring first to Figure 1 of the accompanying drawings the tube dispensing apparatus includes a support platform 11 which has a planar, generally horizontal, upper surface 12. Tubes 13 to be dispensed are arranged as a tube stack on the surface 12 of the platform 11. The exact nature of the tubes is not of importance, but the apparatus is primarily intended for use in dispensing extruded flat tubes each of which comprises a predetermined length of extruded tubular material having a pair of parallel planar walls spaced apart to define one or more internal passageways, and interconnected by U-shaped tube edge regions. Such tubes, and their various modifications, would be well understood by those skilled in the art. As mentioned above extruded flat tube, which may be formed from aluminium or aluminium alloy, is particularly prone, when in an un-coated form, to scratching and scoring of its external surface which may impair the reliability of the tube when in use in a heat exchanger or condenser. The tube 13 illustrated in the drawings has a single, transverse internal wall dividing the tube internally into first and second elongate, parallel, passageways, but the tube could have a plurality of such internal walls.

The tubes 13 are arranged on the platform 11 in the form of a stack wherein adjacent tubes have their flat faces in contact, the flat faces of the tubes being parallel to one another and being disposed at right angles to the surface 12 of the platform 11. Thus the tubes 13 of the tube stack can slide along the platform 11 with one curved edge region of each tube engaging the surface 12.

Any convenient means, for example a mechanical or pneumatic spring, a hydraulic pressing device, or simply a gravity feed arrangement, can be used to urge the tube stack so that the tubes 13 are in facial contact, and slide along the surface 12 from a feed end 12a thereof towards a dispensing slot 14 provided in the platform 12. Positioned upstanding from the surface 12, adjacent the slot 14, and movable towards and away from the tube stack, is an abutment plate 15. The abutment plate 15 has a rest position (as shown in Figure 1) in which it partly overlies the dispensing slot 14. The tube indicated at 13b in Figure 1 has been dispensed in the previous cycle, and it can be seen that the first tube 13a at the end of the tube stack 13 engages the abutment plate 15 while the member 15 is in its rest position.

Positioned above the tube stack 13 is a clamping platen 16 carried at one end of a slide rod 17 which extends upwardly from the platen 16 slidably through a guide bore 19 in a guide block 18. At the face of the block 18 remote from the platen 16 the rod 17 has an enlarged head 21. A compression spring 22 encircles the rod 17 and extends between the guide block 18 and the platen 16 to urge the platen 16 downwardly relative to the guide block 18.

As mentioned above the tubes 16 are elongate, and the slot 14 in the platform 11 will be longer than the length of the tubes 13 in order to allow the tubes 13 to pass, unimpeded, through the slot 14. Moreover, the abutment plate 15 will, desirably, be of a length similar to that of the tube length in order to provide an abutment through substantially the whole length of the tubes. Similarly, the length of the platen 16 will be similar to that of the tubes to ensure efficient clamping in use. Dependent upon the length of the platen 16 it may be preferred to provide a rod 17 and spring 22 adjacent each end of the platen, and in some cases perhaps also at the middle of the platen.

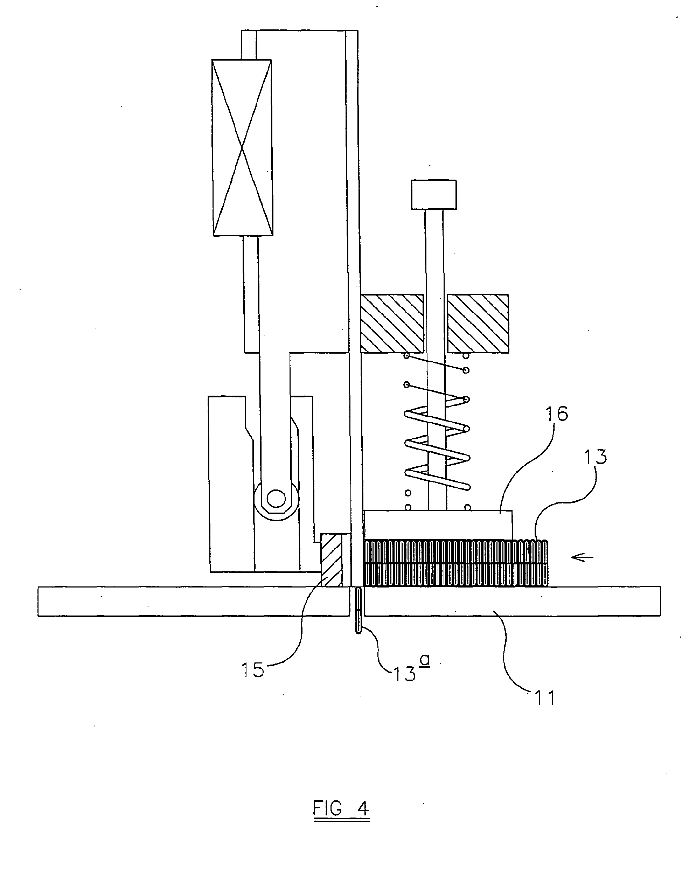

The guide block 18 is secured to a moving carriage 23 of a dispensing blade assembly 24. The carriage 23 is mounted in any convenient guide arrangement provided on the fixed frame of the dispensing apparatus (not shown) for reciprocatory movement towards and away from the platform 11 in a plate normal to the plane of the surface 12 of the platform 11. The drive mechanism 25 for generating reciprocatory motion of the carriage 23 can take a number of forms, but conveniently comprises a rotary crank arrangement driven by the output shaft of an electric motor. Figure 1 shows the carriage 23 at the uppermost point in its reciprocatory stroke, and Figure 4 shows the carriage 23 at the lowermost point in its stroke.

The carriage 23 carries the dispensing blade 24 which extends downwardly normal to the surface 12 of the platform 11 and is aligned with the dispensing slot 14. As is apparent the blade 24 does not actually move into the slot 14 but it could do so if necessary. The length and width of the blade 24 are such that it could pass, unimpeded, into the dispensing slot 14 in the event that the stroke of the carriage 23 was sufficient.

Depending from the carriage 23 parallel to the blade 24 is a cam member 26 incorporating a cam roller 27 at its lowermost end. The roller 27 is rotatable about an axis parallel to the plane of the platform 12 and rides, within the stroke of the carriage 23, in a cam groove 29 in a block 28 secured to the abutment plate 15. The block 28 is guided by guide means (not shown) on the frame of the apparatus, for rectilinear sliding movement parallel to the plane of the platform 11 and towards and away from the tube stack 13.

It can be seen in Figure 1, that at the top of the stroke of the carriage 23, the guide block 18 abuts the head 21 of the rod 17 and so lifts the platen 16 out of contact with the upper curved edges of the tubes 13 of the stack.

The operation of the apparatus is as follows. Figure 1 shows the position of the apparatus with the carriage 23 at the uppermost point of its reciprocatory stroke. When the first cycle of operation is about to commence the components will be as shown in Figure 1 but the tube 13b will not be visible since any previously dispensed tubes will have been accommodated in the core builder downstream of the dispensing apparatus. At the top of the stroke of the carriage 23 the abutment plate 15 is in its forward, rest position, and the clamping platen 16 is displaced upwardly from the tubes of the stack so that the mechanism urging the stack to the left in the drawings presses the stack against the abutment plate 15 and presses the tubes in the stack into facial contact with one another. The first tube 13a in the stack does not fall through the slot 14 under gravity because it is pinched between the next tube 13 in the stack and the abutment plate 15. Furthermore, desirably the rest position of the abutment plate 15 is such that the first tube 13a in the stack engages the comer defmed between the slot 14 and the surface 12 of the platform 11 so that the platform 11 provides slight assistance to friction between the tube 13a and the plate 15 and the second tube, in resisting movement of the tube 13a under gravity downwardly through the slot 14.

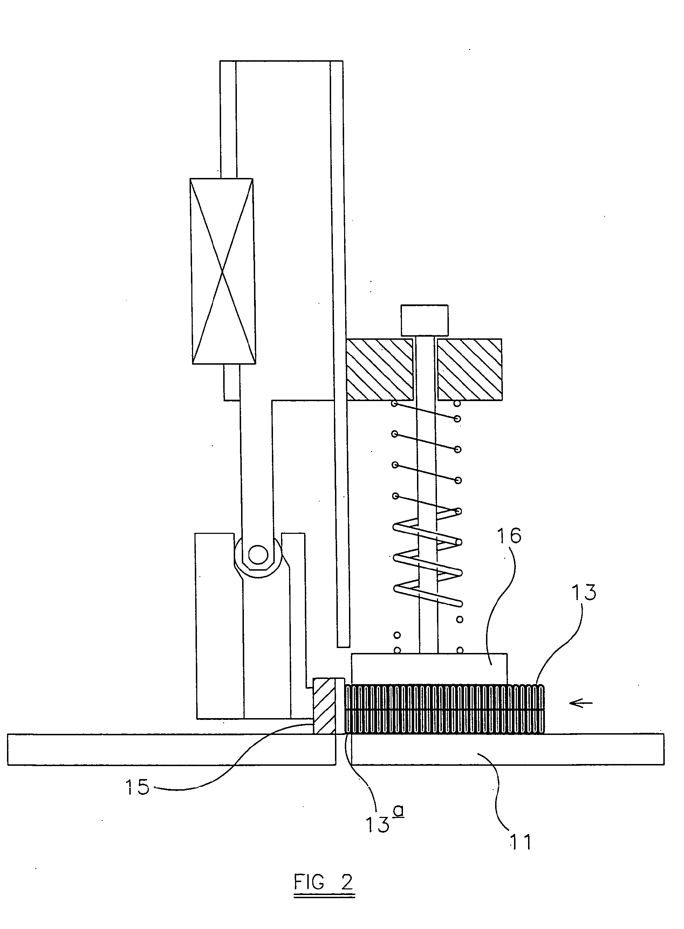

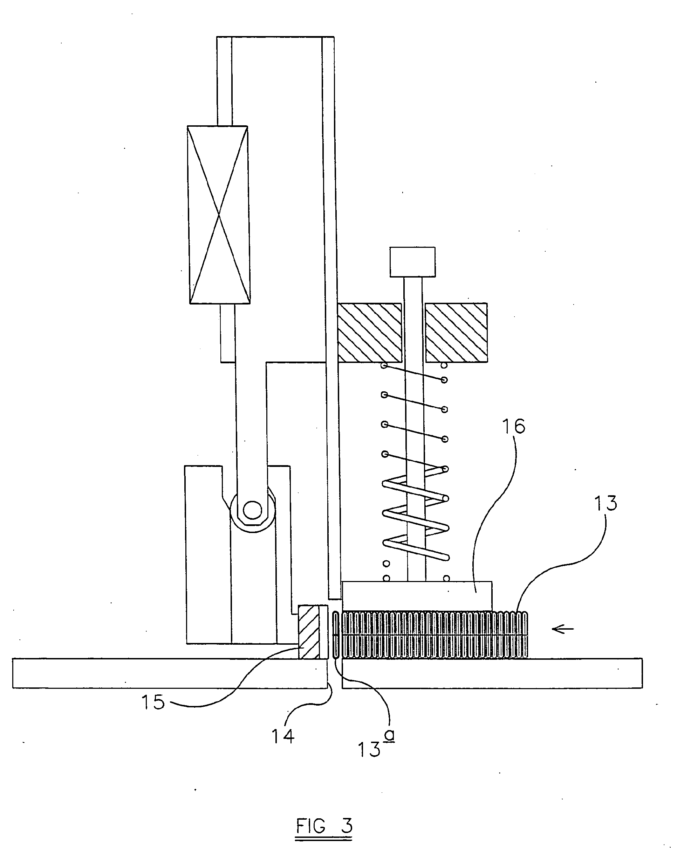

As the dispensing cycle commences the mechanism 25 drives the carriage 23 downwardly. Immediately following the commencement of the downward movement (Figure 2) the platen 16 engages the tops of the second and a group of subsequent tubes of the stack and thereafter the rod 17 slides through the guide block 18 and the spring 22 loads the platen 16 towards the platform 11 clamping the second and subsequent tubes against the platform surface 12. The width of the platen 16 will be determined such that it clamps about 25 tubes at the left hand end of the tube stack, but does not clamp the first tube 13a. However, at this point the tube 13a cannot move as it is still held in place between the second tube of the stack and the abutment plate 15. The clamping effect imposed upon the stack by the platen 16 is such that the stack is held against movement relative to the platform 11. As the carriage 23 descends towards the platform 11 the cooperation between the cam roller 27 and the cam groove 29 (Figure 3) drives the block 28 to the left so withdrawing the abutment plate 15 away from the rest position, that is to say away from the tube stack thereby releasing the grip on the tube 13a so that the tube 13a can drop under gravity through the slot 14. It will be recognised that the lower edge of the tube 13 is a curve of relatively tight radius, and thus even where the tube 13a is partially seated on the edge of the platform surface 12 the weight of the tube will still cause the tube to enter, and drop through, the slot 14. However, the downward movement of the carriage 23 is of course accompanied by corresponding downward movement of the dispenser blade 24 and the dispenser blade 24 passes between the tube stack and the plate 15 to ensure that the tube 13a is dispensed through the slot 14 even in the event that it adheres lightly to either the next tube in the stack, or the plate 15.

It will be recognised that at no point during the feed and dispensing of tubes are the tubes required to slide against other tubes, the abutment plate 15, or the dispenser blade 24. Thus the risk of damage to the tubes during dispensing is minimised.

Figure 3 illustrates the position in which the abutment plate 15 has been withdrawn from its rest position, and the tube 13a is freed to fall through the slot 14. Figure 4 illustrates the dispenser blade 24 at the lowest point of the reciprocatory stroke, ensuring that the tube 13a is dispensed through the slot 14. It can be seen that throughout this phase of the operation the platen 16 remains spring loaded against the tube stack.

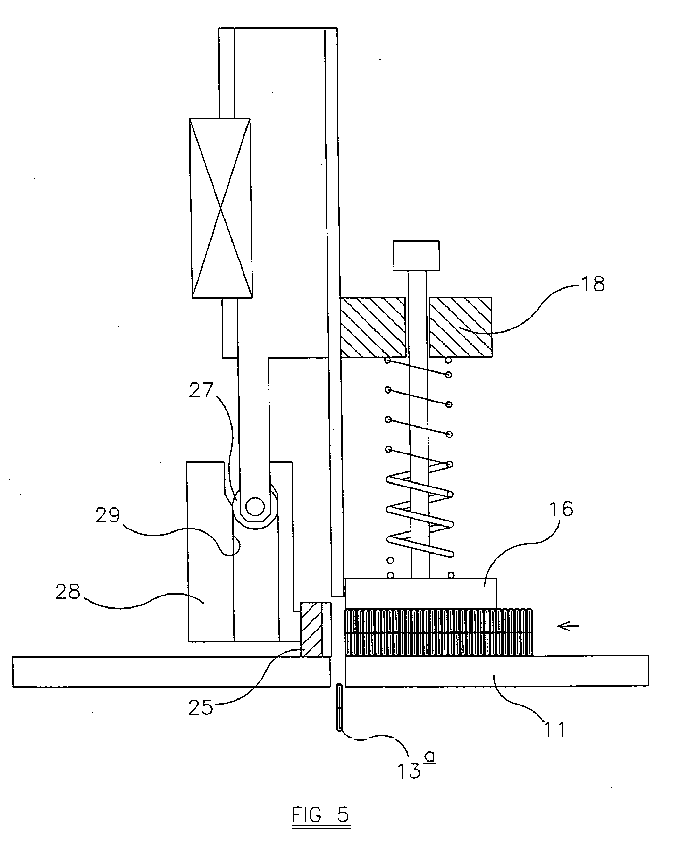

Figure 5 illustrates the position as the reciprocatory movement of the carriage 23 reverses and the carriage 23 starts to move upwardly away from the platform 11. It can be seen that there is nothing engaging the outer face of the end tube 13 of the stack, but the stack has not moved to the left since it is clamped by the platen 16 against the platform 11.

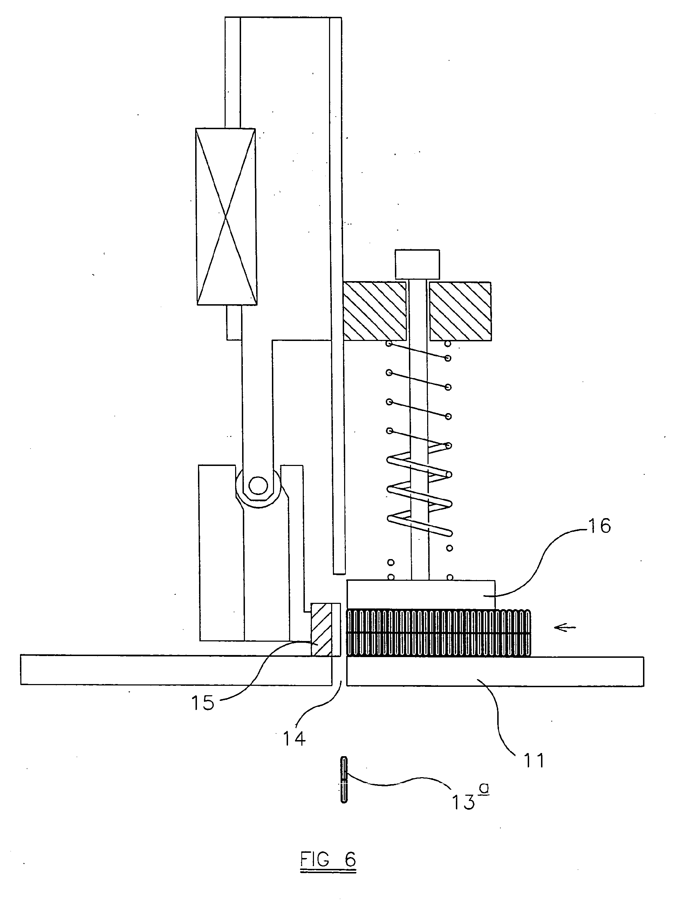

Figure 6 shows that the cam roller 27 has reached the point along the length of the cam groove 29 such that the block 28 and abutment plate 15 are returned to their rest positions. Thus the abutment plate 15 is partially overlying the slot 14, but has not yet been engaged by the end tube of the tube stack.

At the end of one complete cycle the components have returned to the highest point in the reciprocatory cycle (the start point as shown in Figure 1) in which the guide block 18 has lifted the platen 16 away from the tubes 13, thereby allowing the tube stack to move to the left so that the new first tube of the stack abuts the abutment plate 15 and is thus held in position by being trapped between the next tube of the stack and the abutment plate 15.

From this point the cycle repeats and in each complete cycle a single tube is dispensed. It is believed that a dispensing rate of at least 3 tubes per second can be achieved using this mechanism.

The cycle of the dispensing apparatus may well be coordinated with the cycle of one or more parts of a core building apparatus. Thus there may be occasions during core building when a cycle is to be performed, because of the requirements of some ancilliary apparatus, but no tube is needed to be dispensed. A convenient way to facilitate a "blank" cycle of the dispensing apparatus is to prevent the platen 16 lifting away from the tube stack, and thus releasing the tube stack for leftward movement, at the highest point of the stroke of the carriage. Such operation can be achieved by interposing a removable slipper or similar spacer between the guide block 18 and the head 21 of the post 17.

While the slipper is in place the operation is exactly as described above. However, removal of the slipper from between the block 18 and the head 21 ensures that even at the highest point of the stroke of the carriage 23 the block 18 cannot abut the head 21 and so cannot lift the platen 16 away from the tubes. Thus with the slipper removed from between the block 18 and the head 21 the tube stack remains clamped against the platform 11 by the platen 16 throughout the whole cycle of operation, and thus after a tube 13a has been dispensed no further tubes are moved forward and the blade 24 and abutment plate 15 simply perform their reciprocating cycles without a tube being dispensed. Reintroduction of the slipper between the block 18 and the head 21 renders the platen 16 liftable at the highest point in the reciprocatory stroke of the carriage 23 thus restoring release of the back to "reload" a tube for dispensing in the subsequent cycle. A mechanism for removing and reintroducing the slipper at predetermined times or after dispensing a predetermined, programmable number of tubes, will be provided.

Although it is convenient to position the apparatus with the surface 12 of the platform 11 horizontal, it is to be understood that the apparatus could function in other orientations except that gravity cannot be relied upon to move the tube which is being dispensed, through the slot 14, and therefore there may be greater reliance upon the blade 24 to perform the dispensing action.

## Claims

1. A tube dispensing apparatus comprising a support surface (12) for supporting a stack of elongate flat tubes (13) positioned with their parallel faces generally normal to the plane of the support surface, and **characterised by** a dispensing edge (14) at an end of said support surface adjacent which an end tube (13a) of the tube stack supported on the support surface (12) can be positioned for dispensing, a movable tube abutment member (15) having a rest position adjacent said dispensing edge and against which said tube stack is urged in use, releasable clamp means (16) overlying said tube stack and clamping at least that tube next adjacent the tube (13a) to be dispensed against said support surface (12), and, means (25-29) for withdrawing said tube abutment member (15) from said rest position while said clamp means (16) is operative, so that the end tube (13a) of the stack is freed to be dispensed past said dispensing edge while the remainder of the stack is held in place relative to the support surface by said clamp means, said abutment member (15) being restored to its rest position after said tube has been dispensed, and thereafter said releasable clamp means (16) being released to permit the stack to be indexed forwards to engage the new end tube of the stack with the abutment member (15), prior to being restored to its operative condition to clamp at least the new second tube in the stack against the support surface.

2. Apparatus as claimed in Claim 1 and **characterised by** a reciprocable dispensing blade (24) which, after the abutment member (15) is withdrawn from its rest position, passes between the abutment member (15) and the remainder of the tube stack to ensure that the free end tube is dispensed past said dispensing edge.

3. Apparatus as claimed in Claim 2 **characterised in that** said means for withdrawing said abutment member (15), said dispensing blade (24) and said clamp means are carried by a common movable carriage (23).

4. Apparatus as claimed in anyone of Claims 1 to 3 **characterised in that** said means (25-29) for withdrawing said abutment member (15) includes a roller cam arrangement (27, 29).

5. Apparatus as claimed in Claim 3 or Claim 4 **characterised in that** said clamp means (16) is spring loaded, the spring arrangement being compressed to maintain clamping force on said tubes during movement of the carriage (25) to cause the blade (24) to dispense the free end tube, and the spring travel of the clamping means being limited so that adjacent the end of the travel of said carriage in a return direction the clamp means is lifted by the carriage (25) away from said tubes (13).

6. A method of dispensing flat tube **characterised by** comprising, urging a stack of tubes positioned with their flat faces parallel to one another in a direction at right angles to the parallel planes of said flat faces against an abutment member (15), clamping the stack, with the exception of the tube (13a) abutting the abutment member, against further movement relative to the abutment member, withdrawing the abutment member from a rest position to release the end tube of the stack to be dispensed, returning the abutment member to said rest position after said tube has been dispensed, releasing the clamping force on said stack to allow the stack to move to engage a new end tube with the abutment member, and restoring the clamping force to clamp the stack, with the exception of that tube which is engaged with the abutment member, against movement towards the abutment member.

7. A method as claimed in Claim 5 **characterised in that**, at a predetermined time in the repeating sequence of dispensing tubes, the step of releasing the clamping force on the stack after the abutment member has been returned to its rest position, is omitted, so that the next cycle takes place without the stack moving forward, and so takes place without a tube being dispensed.
